# EUROPÄISCHE PATENTSCHRIFT

(11) **EP 2 946 105 B1**
(45) Veröffentlichungstag und Bekanntmachung des Hinweises auf die Patenterteilung: **15.03.2017**
(21) Anmeldenummer: 14700476.6
(22) Anmeldetag: 14.01.2014
(51) Int. Cl.: F02M 63/00, F02M 55/00, F02M 55/02, F02M 61/14

(54) **BRENNSTOFFEINSPRITZANLAGE MIT EINER BRENNSTOFF FÜHRENDEN KOMPONENTE, EINEM BRENNSTOFFEINSPRITZVENTIL UND EINEM VERBINDUNGSELEMENT**
FUEL INJECTION SYSTEM HAVING A FUEL-CONDUCTING COMPONENT, A FUEL INJECTION VALVE AND A CONNECTION ELEMENT
SYSTÈME D'INJECTION DE CARBURANT COMPORTANT UN COMPOSANT ACHEMINANT LE CARBURANT, UNE SOUPAPE D'INJECTION DE CARBURANT ET UN ÉLÉMENT DE LIAISON

(30) Priorität: 18.01.2013 DE 102013200728
(43) Veröffentlichungstag der Anmeldung: 25.11.2015
(73) Patentinhaber: Robert Bosch GmbH, 70442 Stuttgart (DE)
(72) Erfinder: FISCHER, Michael, 75223 Niefern-Oeschelbronn (DE); KNORPP, Michael, 71287 Weissach (DE); RIEMER, Martin, 74199 Untergruppenbach (DE); HORST, Hans-Georg, 71229 Leonberg (DE); GLASER, Andreas, 70372 Stuttgart (DE); ROGLER, Philipp, 70176 Stuttgart (DE); HERRMANN, Jan, 70435 Stuttgart (DE); REHWALD, Andreas, 74321 Bietigheim-Bissingen (DE); MAYER, Michael, 72827 Wannweil (DE); SCHEEF, Volker, 71640 Ludwigsburg (DE); REINHARDT, Wilhelm, 75443 Oetisheim (DE)
(86) Internationale Anmeldenummer: PCT/EP2014/050561
(87) Internationale Veröffentlichungsnummer: WO 2014/111367

(56) Entgegenhaltungen:
- EP-A2- 1 262 652
- WO-A1-2013/160064
- DE-A1-102005 020 380
- US-B1- 7 334 571

## Beschreibung

### Stand der Technik

Die Erfindung betrifft ein Verbindungselement für Brennstoffeinspritzanlagen zur Verbindung eines Brennstoffeinspritzventils mit einer Brennstoff führenden Komponente und eine Brennstoffeinspritzanlage mit solch einem Verbindungselement. Speziell betrifft die Erfindung das Gebiet der Brennstoffeinspritzanlagen für gemischverdichtende, fremdgezündete Brennkraftmaschinen.

Aus der DE 10 2005 020 380 A1 ist eine Brennstoffeinspritzvorrichtung bekannt, die sich durch eine Schall entkoppelnde Bauweise auszeichnet. Die bekannte Brennstoffeinspritzvorrichtung umfasst ein Brennstoffeinspritzventil, eine Aufnahmebohrung für das Brennstoffeinspritzventil in einem Zylinderkopf und eine Brennstoffverteilerleitung mit einem Anschlussstutzen, in den das Brennstoffeinspritzventil teilweise überlappend eingebracht ist. Bei einer möglichen Ausgestaltung ist ein Verbindungskörper vorgesehen, der einerseits einen Haltekragen das Brennstoffeinspritzventil im Bereich einer Gehäuseschulter untergreift und andererseits über eine nicht stoffschlüssige Verbindung, zum Beispiel eine Schnapp-Verbindung, mit dem Anschlussstutzen verbunden ist. Der Verbindungskörper ist rohrförmig ausgeführt und besitzt zum Durchgreifen eines elektrischen Anschlusssteckers des Brennstoffeinspritzventils eine Ausnehmung. Außerhalb dieser Ausnehmung kann der Verbindungskörper um 360° umlaufend ausgeführt sein. An der Gehäuseschulter wird das Brennstoffeinspritzventil von einem Haltekragen des Verbindungskörpers untergriffen, so dass das Brennstoffeinspritzventil gegenüber einer radial verlaufenden Schulter der Aufnahmebohrung beabstandet frei hängt. An seinem dem Anschlussstutzen zugewandten Ende weist der Verbindungskörper über den Umfang gesehen zwei gegenüberliegende Schlitze auf, die zum Beispiel eine Ausnehmung von ca. 90° besitzen. Die Schlitze werden von einem bügelförmigen, U-förmigen Schnappring durchgriffen. Der Schnappring greift zudem im Umfangsbereich der Schlitze in dem Verbindungskörper in zwei schlitzförmige Nuten am Umfang des Anschlussstutzens zu sicheren Befestigung des Verbindungskörpers an der Brennstoffverteilerleitung ein. Außerdem ist ein Niederhalter vorgesehen.

Die aus der DE 10 2005 020 380 A1 bekannte Ausgestaltung der Brennstoffeinspritzvorrichtung hat den Nachteil, dass über den Verbindungskörper und den Schnappring Schwingungen von dem Brennstoffeinspritzventil auf den Anschlussstutzen übertragen werden. Ferner ist die Ausgestaltung konstruktiv aufwändig und aufgrund eines langen Hebelarms des Verbindungskörpers vergleichsweise instabil. Dies wirkt sich auch ungünstig auf die Montierbarkeit aus.

Eine weitere Ausgestaltung einer derartigen Verbindung ist aus US 7 334 571 B bekannt.

Speziell bei elektromagnetischen Hochdruckeinspuritzventilen, die bei Otto-Motoren mit Direkteinspritzung zum Einsatz kommen können, kann ein auffälliger und störender Beitrag zum Gesamtgeräusch des Motors geleistet werden, der als Ventiltickern beschreibbar ist. Solch ein Ventiltickern entsteht durch das schnelle Öffnen und Schließen des Brennstoffeinspritzventils, bei dem die Ventilnadel mit hoher Dynamik in die jeweiligen Endanschläge verstellt wird. Das Auftreffen der Ventilnadel in den Endanschlägen führt zu kurzzeitigen, aber sehr hohen Kontaktkräften, die über ein Gehäuse des Brennstoffeinspritzventils an den Zylinderkopf und an eine Brennstoffverteilerleiste in Form von Körperschall und Schwingungen übertragen werden. Dies führt unter anderem an der Brennstoffverteilerleiste zu einer starken Geräuschentwicklung.

### Offenbarung der Erfindung

Das erfindungsgemäße Verbindungselement mit den Merkmalen des Anspruchs 1 und die erfindungsgemäße Brennstoffeinspritzanlage mit den Merkmalen des Anspruchs 12 haben den Vorteil, dass eine verbesserte Verbindung des Brennstoffeinspritzventils mit der Brennstoff führenden Komponente ermöglicht ist, wobei eine Geräuschreduzierung ermöglicht ist. Speziell kann eine weiche Anbindung des Brennstoffeinspritzventils an die Brennstoff führende Komponente erreicht werden.

Durch die in den Unteransprüchen aufgeführten Maßnahmen sind vorteilhafte Weiterbildungen des im Anspruch 1 angegebenen Verbindungselements und der im Anspruch 12 angegebenen Brennstoffeinspritzanlage möglich.

Speziell eignen sich das Verbindungselement und die Brennstoffeinspritzanlage zur Benzindirekteinspritzung. Die Brennstoff führende Komponente ist hierbei vorzugsweise als Brennstoffverteiler, insbesondere als Brennstoffverteilerleiste, ausgebildet. Solch ein Brennstoffverteiler kann zum einen zur Verteilung des Brennstoffs auf mehrere Brennstoffeinspritzventile, insbesondere Hochdruckeinspritzventile, dienen. Zum anderen kann der Brennstoffverteiler als gemeinsamer Brennstoffspeicher für die Brennstoffeinspritzventile dienen. Die Brennstoffeinspritzventile sind dann vorzugsweise über sich entsprechende Verbindungselemente mit dem Brennstoffverteiler verbunden. Im Betrieb spritzen die Brennstoffeinspritzventile den zum Verbrennungsvorgang notwendigen Brennstoff dann unter hohem Druck in den jeweiligen Verbrennungsraum ein. Der Brennstoff wird hierbei über eine Hochdruckpumpe verdichtet und mengengesteuert über eine Hochdruckleitung in den Brennstoffverteiler gefördert.

Das Brennstoffeinspritzventil, insbesondere der Brennstoffstutzen, ist kein Bestandteil des erfindungsgemäßen Verbindungselements. Ferner ist die Brennstoff führende Komponente nicht notwendigerweise Bestandteil des erfindungsgemäßen Verbindungselements. Je nach Anwendungsfall kann das Verbindungselement allerdings Bestandteil der Brennstoff führenden Komponente sein und gegebenenfalls in diese integriert sein. Das erfindungsgemäße Verbindungselement kann auch getrennt von einem Brennstoffeinspritzventil sowie gegebenenfalls getrennt von einer Brennstoff führenden Komponente hergestellt und vertrieben werden.

In vorteilhafter Weise ist das elastische Lagerelement an der Aussparung, die in der Wand des Grundkörpers vorgesehen ist, angeordnet. Das elastische Lagerelement kann hierbei allerdings auch außerhalb der Wand, insbesondere im Bereich des Aufnahmeraums, vorgesehen sein. Vorteilhaft ist es allerdings, dass das elastische Lagerelement zumindest im Wesentlichen nur an der Aussparung, die in der Wand des Grundkörpers vorgesehen ist, angeordnet ist.

Hierbei ist es auch vorteilhaft, dass die Aussparung, die in der Wand des Grundkörpers vorgesehen ist, durch eine Bohrung gebildet ist, die sich von einer Außenseite der Wand in den Aufnahmeraum erstreckt, dass das elastische Lagerelement als hülsenförmiges, elastisches Lagerelement ausgestaltet ist und dass sich das hülsenförmige Lagerelement zumindest entlang der Bohrung durch die Wand erstreckt. Vorzugsweise erstreckt sich das hülsenförmige Lagerelement hierbei zumindest im Wesentlichen nur entlang der Bohrung durch die Wand, so dass es im Wesentlichen nur im Bereich der Bohrung vorgesehen ist. Hierdurch wird eine elastische Lagerung des Befestigungselements in dem Grundkörper ermöglicht. Dadurch wird eine weiche Aufhängung des Brennstoffeinspritzventils realisiert. Für das Lagerelement kann hierbei über die Wahl des Werkstoffs die gewünschte Elastizität vorgegeben werden. Durch ein oder mehrere elastische Lagerelemente kann auf diese Weise ein Lager für das Befestigungselement an dem Grundkörper realisiert werden. Das elastische Lagerelement kann insbesondere aus einem Kunststoff gebildet sein.

Vorteilhaft ist es, dass das Befestigungselement zumindest einen stabförmigen Arm aufweist, dass in der Wand des Grundkörpers eine zweite Aussparung vorgesehen ist, die durch eine zweite Bohrung gebildet ist, dass sich die zweite Bohrung von der Außenseite der Wand in den Aufnahmeraum erstreckt, dass die Bohrung und die zweite Bohrung auf einer gemeinsamen Einschubachse für den stabförmigen Arm des Befestigungselements liegen, dass ein zweites hülsenförmiges, elastisches Lagerelement vorgesehen ist, das sich entlang der zweiten Bohrung durch die Wand erstreckt, dass der stabförmige Arm des Befestigungselements entlang der gemeinsamen Einschubachse durch die Bohrung und die zweite Bohrung führbar ist und dass der durch die erste Bohrung und die zweite Bohrung geführte stabförmige Arm des Befestigungselements über das elastische Lagerelement und das zweite elastische Lagerelement an der Wand des Grundkörpers abgestützt ist. Bei der Montage kann der Brennstoffstutzen zunächst in den Aufnahmeraum des Grundkörpers eingefügt werden. Dann kann das Befestigungselement mit seinem stabförmigen Arm entlang der gemeinsamen Einschubachse in den Grundkörper eingefügt werden. Somit kann in einfacher Weise eine weiche Aufhängung des Brennstoffeinspritzventils erzielt werden.

Hierbei ist es außerdem von Vorteil, dass das Befestigungselement einen weiteren stabförmigen Arm aufweist, dass in der Wand des Grundkörpers eine dritte Aussparung, die durch eine dritte Bohrung gebildet ist, und eine vierte Aussparung, die durch eine vierte Bohrung gebildet ist, vorgesehen sind, dass sich die dritte Bohrung und die vierte Bohrung von der Außenseite der Wand in den Aufnahmeraum erstrecken, dass die dritte Bohrung und vierte Bohrung auf einer gemeinsamen weiteren Einschubachse für den weiteren stabförmigen Arm des Befestigungselements liegen, dass ein drittes hülsenförmiges, elastisches Lagerelement, das sich entlang der dritten Bohrung durch die Wand erstreckt, und ein viertes hülsenförmiges, elastisches Lagerelement, das sich entlang der vierten Bohrung durch die Wand erstreckt, vorgesehen sind, dass der weitere stabförmige Arm des Befestigungselements entlang der gemeinsamen weiteren Einschubachse durch die dritte Bohrung und die vierte Bohrung führbar ist und dass das durch die dritte Bohrung und die vierte Bohrung geführte Befestigungselement über das dritte elastische Lagerelement und das vierte elastische Lagerelement an der Wand des Grundkörpers abgestützt ist. Hierbei kann das Befestigungselement insbesondere in vorteilhafter Weise als U-förmiges Befestigungselement ausgestaltet sein. Das Befestigungselement kann hierbei aus einem metallischen Werkstoff gebildet sein. Vorzugsweise sind zumindest die stabförmigen Arme des Befestigungselements aus solch einem metallischen Werkstoff gebildet. Um das Einfügen des Befestigungselements zu erleichtern, ist es vorteilhaft, dass die Einschubachse und die weitere Einschubachse parallel zu einander orientiert sind. Hierbei kann jedoch auch eine gewisse Verspannung des U-förmigen Befestigungselements durch ein Auf- oder Zusammenbiegen der beiden Arme erforderlich sein. Dann wird eine gewisse Vorspannung im montierten Zustand erzielt, die beispielsweise die Funktion einer Verliersicherung gewährleistet.

Die Einschubachse und die weitere Einschubachse sind vorzugsweise senkrecht zu einer Achse des Aufnahmeraums orientiert. Bei der Lagerung des Brennstoffeinspritzventils an dem Grundkörper kann dadurch das Auftreten von Querkräften vermieden werden.

Bei einer weiteren Ausgestaltung ist es auch denkbar, dass das elastische Lagerelement an einer Innenseite der Wand des Grundkörpers vorgesehen ist. Vorzugsweise weist hierbei der Grundkörper eine Öffnung auf, über die der Brennstoffstutzen in den Aufnahmeraum führbar ist, wobei die Wand des Grundkörpers eine ringförmige Stirnseite aufweist, die die Öffnung umschließt, und wobei sich das elastische Lagerelement von einer Außenseite der Wand über die Stirnseite der Wand zu der Innenseite der Wand erstreckt. Beispielsweise kann das elastische Lagerelement im Bereich der ringförmigen Stirnseite auf den Grundkörper aufgeclipst werden. Dies ermöglicht eine kostengünstige Ausgestaltung und eine einfache Montierbarkeit. Hierbei erstreckt sich das elastische Lagerelement vorzugsweise umfänglich über die Innenseite der Wand. Dadurch ist eine allseitige weiche Lagerung ermöglicht.

### Kurze Beschreibung der Zeichnungen

Bevorzugte Ausführungsbeispiele der Erfindung sind in der nachfolgenden Beschreibung unter Bezugnahme auf die beigefügten Zeichnungen, in denen sich entsprechende Elemente mit übereinstimmenden Bezugszeichen versehen sind, näher erläutert. Es zeigen:
Fig. 1 eine Brennstoffeinspritzanlage mit einem Verbindungselement und einem Brennstoffstutzen eines Brennstoffeinspritzventils entsprechend einem ersten Ausführungsbeispiel in einer auszugsweisen, schematischen, räumlichen Darstellung;
Fig. 2 ein Verbindungselement der in Fig. 1 dargestellten Brennstoffeinspritzanlage in einer auszugsweisen, schematischen Schnittdarstellung entsprechend dem ersten Ausführungsbeispiel der Erfindung und
Fig. 3 eine Brennstoffeinspritzanlage mit einem Verbindungselement und einem Brennstoffstutzen eines Brennstoffeinspritzventils entsprechend einem zweiten Ausführungsbeispiel der Erfindung in einer auszugsweisen, schematischen Schnittdarstellung.

### Ausführungsformen der Erfindung

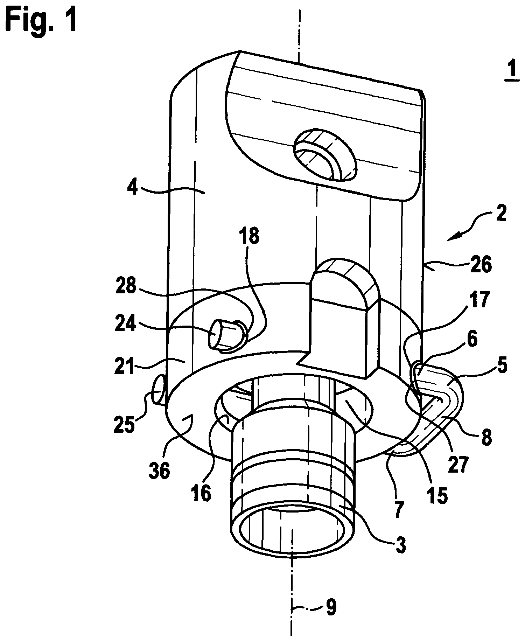

Fig. 1 zeigt eine Brennstoffeinspritzanlage 1 mit einem Verbindungselement 2 und einem Brennstoffstutzen 3 eines Brennstoffeinspritzventils entsprechend einem ersten Ausführungsbeispiel in einer auszugsweisen, schematischen, räumlichen Darstellung. Die Brennstoffeinspritzanlage 1 kann insbesondere zur Hochdruckeinspritzung bei Brennkraftmaschinen dienen. Speziell kann die Brennstoffeinspritzanlage 1 bei gemischverdichtenden, fremdgezündeten Brennkraftmaschinen zum Einsatz kommen. Das Verbindungselement 2 eignet sich besonders für solch eine Brennstoffeinspritzanlage 1.

Die Brennstoffeinspritzanlage 1 weist vorzugsweise mehrere solcher Verbindungselemente 2 auf, um eine Verbindung zu mehreren Brennstoffstutzen 3 einer entsprechenden Anzahl an Brennstoffeinspritzventilen herzustellen. Die Brennstoffeinspritzanlage 1 kann dadurch speziell als Brennstoffeinspritzanlage 1 zur Hochdruckeinspritzung bei Brennkraftmaschinen ausgestaltet sein, wobei unter hohem Druck stehender Brennstoff auf mehrere Brennstoffeinspritzventile aufgeteilt werden kann.

Der Brennstoffstutzen 3 ist in diesem Ausführungsbeispiel als Anschlusshülse 3 ausgestaltet. Das Verbindungselement 2 weist einen Grundkörper 4 und ein Befestigungselement 5 auf. Der Brennstoffstutzen 3 ist über das Befestigungselement 5 mit dem Grundkörper 4 verbunden. Hierbei ist ein direkter Kontakt zwischen dem Brennstoffstutzen 3 und dem Grundkörper 4 vermieden.

Das Befestigungselement 5 weist einen stabförmigen Arm 6 und einen weiteren stabförmigen Arm 7 auf. Ferner weist das Befestigungselement 5 einen Bügelabschnitt 8 auf, über den die stabförmigen Arme 6, 7 miteinander verbunden sind. Das Befestigungselement 5 kann beispielsweise aus einem metallischen Werkstoff gebildet sein.

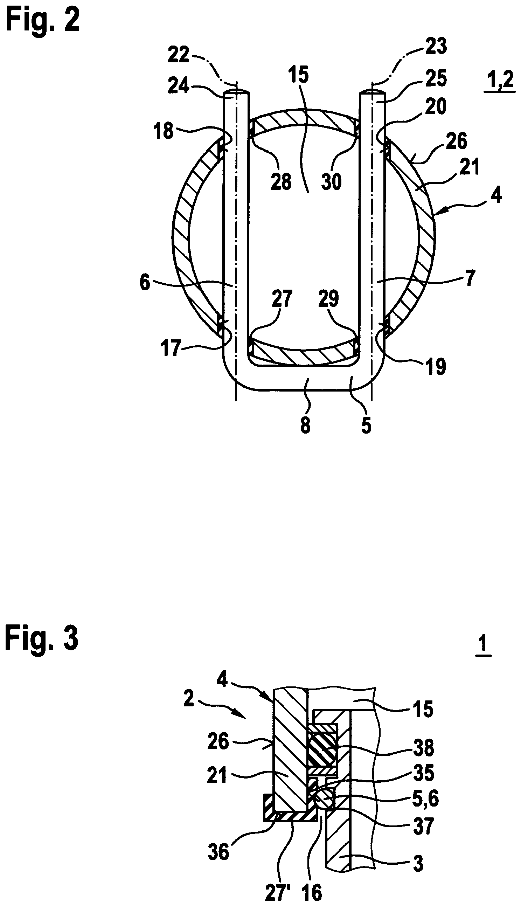

Die Ausgestaltung der Brennstoffeinspritzanlage 1 und des Verbindungselements 2 ist im Folgenden auch unter Bezugnahme auf die Fig. 2 weiter beschrieben.

Fig. 2 zeigt das Verbindungselement 2 der in Fig. 1 dargestellten Brennstoffeinspritzanlage 1 in einer auszugsweisen, schematischen Schnittdarstellung entsprechend dem ersten Ausführungsbeispiel, wobei der Brennstoffstutzen 3 zur Vereinfachung der Darstellung nicht gezeigt ist. Die Schnittebene ist hierbei senkrecht zu einer Achse 9 des Brennstoffstutzens 3 des Brennstoffeinspritzventils gewählt.

Der Grundkörper 4 weist einen Aufnahmeraum 15 auf. Bei der Montage wird der Brennstoffstutzen 3 über eine Öffnung 16 des Grundkörpers 4 zumindest teilweise in den Aufnahmeraum 15 eingebracht. Der Grundkörper weist eine erste Aussparung 17, eine zweite Aussparung 18, eine dritte Aussparung 19 und eine vierte Aussparung 20 auf. Die Aussparungen 17 bis 20 sind hierbei in einer Wand 21 des Grundkörpers 4 ausgebildet. In diesem Ausführungsbeispiel ist die erste Aussparung 17 durch eine erste Bohrung 17 gebildet. Die zweite Aussparung 18 ist durch eine zweite Bohrung 18 gebildet. Die dritte Aussparung 19 ist durch eine dritte Bohrung 19 gebildet. Die vierte Aussparung 20 ist durch eine vierte Bohrung 20 gebildet. Die erste Bohrung 17 und die zweite Bohrung 18 liegen auf einer gemeinsamen Achse 22. Die dritte Bohrung 19 und die vierten Bohrung 20 liegen auf einer weiteren gemeinsamen Achse 23.

Bei der Montage des Befestigungselements 5 wird das Befestigungselement 5 mit seinen stabförmigen Armen 6, 7 durch die Aussparungen 17 bis 20 geführt, bis ein Ende 24 des stabförmigen Arms 6 und ein Ende 25 des weiteren stabförmigen Arms 7 etwas aus dem Grundkörper 4 herausragen. Die stabförmigen Arme 6, 7 erstrecken sich dann durch den Aufnahmeraum 15.

In diesem Ausführungsbeispiel sind die Achsen 22, 23 parallel zueinander orientiert. Ferner sind die Achsen 22, 23 senkrecht zu der Achse 9 des Brennstoffstutzens 3 orientiert. Die Achse 9 stimmt hierbei mit der Achse 9 des Aufnahmeraums 15 des Grundkörpers 4 überein.

Die Aussparungen 17 bis 20 beziehungsweise die Bohrungen 17 bis 20 erstrecken sich von einer Außenseite 26 der Wand 21 des Grundkörpers 4 in den Aufnahmeraum 15. Die Bohrungen 17 bis 20 sind somit als Durchgangsbohrungen 17 bis 20 ausgestaltet.

In diesem Ausführungsbeispiel ist in der ersten Bohrung 17 ein erstes elastisches, hülsenförmiges Lagerelement 27 angeordnet. In der zweiten Bohrung 18 ist ein zweites elastisches, hülsenförmiges Lagerelement 28 angeordnet. In der dritten Bohrung 19 ist ein drittes elastisches, hülsenförmiges Lagerelement 29 angeordnet. In der vierten Bohrung 20 ist ein viertes elastisches, hülsenförmiges Lagerelement 30 angeordnet. Das erste Lagerelement 27 und das zweite Lagerelement 28 sind hierbei auf der gemeinsamen Achse 22 angeordnet. Das dritte Lagerelement 29 und das vierte Lagerelement 30 sind auf der gemeinsamen Achse 23 angeordnet. In diesem Ausführungsbeispiel erstrecken sich das erste hülsenförmige Lagerelement 27 und das zweite hülsenförmige Lagerelement 28 nur im Bereich der ersten Bohrung 17 beziehungsweise der zweiten Bohrung 18 entlang der gemeinsamen Achse 22. Ferner erstrecken sich das dritte hülsenförmige Lagerelement 29 und das vierte hülsenförmige Lagerelement 30 nur im Bereich der dritten Bohrung 19 beziehungsweise der vierten Bohrung 20 entlang der weiteren gemeinsamen Achse 23. Die Lagerelemente 27 bis 30 ragen daher einerseits zumindest nicht wesentlich in den Aufnahmeraum 15 und andererseits zumindest nicht wesentlich über die Außenseite 26 hinaus.

Die gemeinsame Achse 22 stellt für die Montage eine gemeinsame Einschubachse 22 für den ersten stabförmigen Arm 6 dar. Die weitere gemeinsame Achse 23 stellt bei der Montage eine weitere gemeinsame Einschubachse 23 für den weiteren stabförmigen Arm 7 dar. Somit kann in einfacher Weise eine Montage des Befestigungselements 5 an dem Grundkörper 4 durch Einschieben erfolgen.

Somit ist das Befestigungselement 5 zum Befestigen des Brennstoffstutzens 3 an dem Grundkörper 4 durch die Aussparungen 17 bis 20 in den Aufnahmeraum 15 einbringbar. Im montierten Zustand gewährleistet das teilweise durch die Aussparungen 17 bis 20 in den Aufnahmeraum 15 eingebrachte Befestigungselement über die elastischen Lagerelement 27 bis 30 eine elastische und weiche Abstützung des Brennstoffstutzens 3 an dem Grundkörper 4. Hierbei ist das Befestigungselement 5 selbst über die elastischen Lagerelemente 27 bis 30 elastisch an der Wand 21 des Grundkörpers 4 abgestützt.

In diesem Ausführungsbeispiel ist das Befestigungselement 5 als U-förmiges Befestigungselement 5 ausgestaltet. Im montierten Zustand liegt der Bügelabschnitt 8 des Befestigungselements 5 vorzugsweise an der Außenseite 26 des Grundkörpers 4 an. Hierdurch ist gewissermaßen ein Anschlag für die Montage gebildet.

Durch die Wahl des Werkstoffs für die Lagerelemente 27 bis 30 kann eine gewünschte Federsteifigkeit für die Aufhängung des Brennstoffeinspritzventils an dem Grundkörper 4 vorgegeben werden. Insbesondere kann eine Federsteifigkeit von nicht mehr als 50 kN/mm vorgegeben werden.

Fig. 3 zeigt eine Brennstoffeinspritzanlage 1 mit einem Brennstoffstutzen 3 eines Brennstoffeinspritzventils und einem Verbindungselement 2 entsprechend einem zweiten Ausführungsbeispiel in einer auszugsweisen, schematischen Schnittdarstellung. In diesem Ausführungsbeispiel ist das elastische Lagerelement 27' an einer Innenseite 35 der Wand 21 des Grundkörpers 4 vorgesehen. Der Grundkörper 4 weist eine Stirnseite 36 auf. Die Stirnseite 36 ist in diesem Ausführungsbeispiel als kreisringförmige Stirnseite 36 ausgestaltet. Die kreisringförmige Stirnseite 36 an der Wand 21 umschließt hierbei die Öffnung 16 für den Aufnahmeraum 15. Das Lagerelement 27' erstreckt sich von der Außenseite 26 über die Stirnseite 36 der Wand 21 zu der Innenseite 35 der Wand 21. Das Lagerelement 27' erstreckt sich ferner umfänglich über die Innenseite 35 der Wand 21. Im montierten Zustand liegt der stabförmige Arm 6 des Befestigungselements 5 einerseits an dem Lagerelement 27' und andererseits an dem Brennstoffstutzen 3 an. Hierbei ist der Arm 6 des Befestigungselements 5 in eine Ausnehmung 37 des Brennstoffstutzens 3 eingefügt. Somit ist eine elastische Abstützung gewährleistet.

Außerdem ist in diesem Ausführungsbeispiel ein O-förmiger Dichtring 38 vorgesehen, der eine Abdichtung zwischen der Wand 21 des Grundkörpers 4 und dem Brennstoffstutzen 3 bildet. Das Lagerelement 27' kann aus einem gewünschten Werkstoff gebildet sein. Hierbei kann durch das Lagerelement 27' auch eine axiale Abstützung gewährleistet werden. Durch das Lagerelement 27' kann hierbei auch ein Hinterschnitt gebildet werden.

Somit kann eine Entkopplung mit einer gewünschten Entkoppelsteifigkeit und einer geforderten Festigkeit realisiert werden, wobei die Anforderungen auch bei hohen Systemdrücken über die Lebensdauer erfüllt werden können. Hierbei ist insbesondere eine weiche Anbindung des Brennstoffeinspritzventils an eine Brennstoffverteilerleiste oder eine andere Brennstoff führende Komponente möglich. Somit kann eine Geräuschreduzierung erzielt werden. Außerdem kann diese Maßnahme zusätzlich zu anderen Geräuschreduktionsmaßnahmen zum Einsatz kommen. Insbesondere kann zusätzlich eine hydraulische Drossel an einem Ventileinlass realisiert werden. Auch eine weiche Railverschraubung oder dergleichen kann bei einer entsprechenden Ausgestaltung der Brennstoffeinspritzanlage 1 vorgesehen sein.

Somit kann in vorteilhafter Weise eine Kombination mit anderen Maßnahmen zur Geräuschreduzierung erfolgen.

Die Erfindung ist nicht auf die beschriebenen Ausführungsbeispiele beschränkt.

## Patentansprüche

1. Verbindungselement (2) für Brennstoffeinspritzanlagen (1) zur Verbindung eines Brennstoffeinspritzventils mit einer Brennstoff führenden Komponente, wobei ein Grundkörper (4) mit einem Aufnahmeraum (15) vorgesehen ist, in den ein Brennstoffstutzen (3) des Brennstoffeinspritzventils zumindest teilweise einführbar ist, wobei in einer Wand (21) des Grundkörpers (4), die den Aufnahmeraum (15) umgibt, zumindest eine Aussparung (17 - 20) ausgestaltet ist, und wobei ein Befestigungselement (5) vorgesehen ist, das zum Befestigen des Brennstoffstutzens (3) an dem Grundkörper (4) zumindest teilweise durch die Aussparung (17 - 20) in den Aufnahmeraum (15) einbringbar ist, **dadurch gekennzeichnet,**
**dass** zumindest ein elastisches Lagerelement (27 - 30; 27') vorgesehen ist und dass das teilweise durch die Aussparung (17-20) in den Aufnahmeraum (15) eingebrachte Befestigungselement (5) über das elastische Lagerelement (27 - 30; 27') an der Wand (21) des Grundkörpers (4) abgestützt ist.

2. Verbindungselement nach Anspruch 1,
**dadurch gekennzeichnet,**
**dass** das elastische Lagerelement (27 - 30) an der Aussparung (17 - 20), die in der Wand (21) des Grundkörpers (4) vorgesehen ist, angeordnet ist.

3. Verbindungselement nach Anspruch 2,
**dadurch gekennzeichnet,**
**dass** die Aussparung (17 - 20), die in der Wand (21) des Grundkörpers (4) vorgesehen ist, durch eine Bohrung (17 - 20) gebildet ist, die sich von einer Außenseite (26) der Wand (21) in den Aufnahmeraum (15) erstreckt, dass das elastische Lagerelement (27 - 30) als hülsenförmiges, elastisches Lagerelement (27 - 30) ausgestaltet ist und dass sich das hülsenförmige Lagerelement (27 - 30) zumindest entlang der Bohrung (17 - 20) durch die Wand (21) erstreckt.

4. Verbindungselement nach Anspruch 3,
**dadurch gekennzeichnet,**
**dass** sich das hülsenförmige Lagerelement (27 - 30) zumindest im Wesentlichen nur entlang der Bohrung (17 - 20) durch die Wand (21) erstreckt.

5. Verbindungselement nach Anspruch 3 oder 4,
**dadurch gekennzeichnet,**
**dass** das Befestigungselement (5) zumindest einen stabförmigen Arm (6) aufweist, dass in der Wand (21) des Grundkörpers (4) eine zweite Aussparung (18) vorgesehen ist, die durch eine zweite Bohrung (18) gebildet ist, dass sich die zweite Bohrung (18) von der Außenseite (26) der Wand (21) in den Aufnahmeraum (15) erstreckt, dass die Bohrung (17) und die zweite Bohrung (18) auf einer gemeinsamen Einschubachse (22) für den stabförmigen Arm (6) des Befestigungselements (5) liegen, dass ein zweites hülsenförmiges, elastisches Lagerelement (28) vorgesehen ist, das sich entlang der zweiten Bohrung (18) durch die Wand (21) erstreckt, dass der stabförmige Arm (6) des Befestigungselements (5) entlang der gemeinsamen Einschubachse (22) durch die Bohrung (17) und die zweite Bohrung (18) führbar ist und dass der durch die Bohrung (17) und die zweite Bohrung (18) geführte stabförmige Arm (6) des Befestigungselements (5) über das elastische Lagerelement (27) und das zweite elastische Lagerelement (28) an der Wand (21) des Grundkörpers (4) abgestützt ist.

6. Verbindungselement nach Anspruch 5,
**dadurch gekennzeichnet,**
**dass** das Befestigungselement (5) einen weiteren stabförmigen Arm (7) aufweist, dass in der Wand (21) des Grundkörpers (4) eine dritte Aussparung (19), die durch eine dritte Bohrung (19) gebildet ist, und eine vierte Aussparung (20), die durch eine vierte Bohrung (20) gebildet ist, vorgesehen sind, dass sich die dritte Bohrung (19) und die vierte Bohrung (20) von der Außenseite (26) der Wand (21) in den Aufnahmeraum (15) erstrecken, dass die dritte Bohrung (19) und die vierte Bohrung (20) auf einer gemeinsamen weiteren Einschubachse (23) für den weiteren stabförmigen Arm (7) des Befestigungselements (5) liegen, dass ein drittes hülsenförmiges, elastisches Lagerelement (29), das sich entlang der dritten Bohrung (19) durch die Wand (21) erstreckt, und ein viertes hülsenförmiges, elastisches Lagerelement (30), das sich entlang der vierten Bohrung (20) durch die Wand (21) erstreckt, vorgesehen sind, dass der weitere stabförmige Arm (7) des Befestigungselements (5) entlang der weiteren gemeinsamen Einschubachse (23) durch die dritte Bohrung (19) und die vierte Bohrung (20) führbar ist und dass das durch die dritte Bohrung (19) und die vierte Bohrung (20) geführte Befestigungselement (5) über das dritte elastische Lagerelement (29) und das vierte elastische Lagerelement (30) an der Wand (21) des Grundkörpers (4) abgestützt ist.

7. Verbindungselement nach Anspruch 6,
**dadurch gekennzeichnet,**
**dass** das Befestigungselement (5) als U-förmiges Befestigungselement (5) ausgestaltet ist und/oder dass die Einschubachse (22) und die weitere Einschubachse (23) zumindest näherungsweise parallel zueinander orientiert sind und/oder dass die Einschubachse (22) zumindest näherungsweise senkrecht zu einer Achse (9) des Aufnahmeraums (15) orientiert ist und/oder dass die weitere Einschubachse (23) zumindest näherungsweise senkrecht zu einer Achse (9) des Aufnahmeraums (15) orientiert ist.

8. Verbindungselement nach Anspruch 6 oder 7,
**dadurch gekennzeichnet,**
**dass** das Befestigungselement (5) zumindest teilweise aus einem metallischen Werkstoff gebildet ist, wobei zumindest der stabförmige Arm (6) und der weitere stabförmige Arm (7) aus dem metallischen Werkstoff gebildet sind.

9. Verbindungselement nach Anspruch 1,
**dadurch gekennzeichnet,**
**dass** das elastische Lagerelement (27') an einer Innenseite (35) der Wand (21) des Grundkörpers (4) vorgesehen ist.

10. Verbindungselement nach Anspruch 9,
**dadurch gekennzeichnet,**
**dass** der Grundkörper (4) eine Öffnung (16) aufweist, über die der Brennstoffstutzen (3) in den Aufnahmeraum (15) führbar ist, dass die Wand (21) des Grundkörpers (4) eine ringförmige Stirnseite (36) aufweist, die die Öffnung (16) umschließt, und dass sich das elastische Lagerelement (27') von einer Außenseite (26) der Wand (21) über die Stirnseite (36) der Wand (21) zu der Innenseite (35) der Wand (21) erstreckt.

11. Verbindungselement nach Anspruch 9 oder 10,
**dadurch gekennzeichnet,**
**dass** sich das elastische Lagerelement (27') umfänglich über die Innenseite (35) der Wand (21) erstreckt.

12. Brennstoffeinspritzanlage (1), insbesondere für gemischverdichtende, fremdgezündete Brennkraftmaschinen, mit zumindest einer Brennstoff führenden Komponente, zumindest einem Brennstoffeinspritzventil (3) und zumindest einem Verbindungselement (2) nach einem der Ansprüche 1 bis 11, wobei der Brennstoffstutzen (3) des Brennstoffeinspritzventils über das Verbindungselement (2) mit der Brennstoff führenden Komponente verbunden ist.

## Claims

1. Connecting element (2) for fuel injection systems (1) for connecting a fuel injection valve to a fuel-conducting component, wherein a main body (4) having a receiving chamber (15) is provided, into which receiving chamber a fuel connector (3) of the, fuel injection valve is at least partially insertable, wherein at least one cutout (17 - 20) is formed in a wall (21), which surrounds the receiving chamber (15), of the main body (4), and wherein a fastening element (5) is provided which, in order to fasten the fuel connector (3) to the main body (4), can be inserted at least partially through the cutout (17 - 20) into the receiving chamber (15),
**characterized**
**in that** at least one elastic bearing element (27 - 30; 27') is provided, and in that the fastening element (5) inserted partially through the cutout (17 - 20) into the receiving chamber (15) is supported on the wall (21) of the main body (4) by way of the elastic bearing element (27 - 30; 27').

2. Connecting element according to Claim 1, **characterized**
**in that** the elastic bearing element (27 - 30) is arranged on the cutout (17 - 20) provided in the wall (21) of the main body (4).

3. Connecting element according to Claim 2, **characterized**
**in that** the cutout (17 - 20) provided in the wall (21) of the main body (4) is formed by a bore (17 - 20) which extends from an outer side (26) of the wall (21) into the receiving chamber (15), in that the elastic bearing element (27 - 30) is in the form of a sleeve-like elastic bearing element (27-30), and in that the sleeve-like bearing element (27-30) extends at least along the bore (17 - 20) through the wall (21).

4. Connecting element according to Claim 3, **characterized**
**in that** the sleeve-like bearing element (27 - 30) extends at least substantially only along the bore (17 - 20) through the wall (21).

5. Connecting element according to Claim 3 or 4, **characterized**
**in that** the fastening element (5) has at least one rod-like arm (6), in that a second cutout (18) is provided in the wall (21) of the main body (4), which second cutout is formed by a second bore (18), in that the second bore (18) extends from the outer side (26) of the wall (21) into the receiving chamber (15), in that the bore (17) and the second bore (18) lie on a common insertion axis (22) for the rod-like arm (6) of the fastening element (5), in that a second sleeve-like, elastic bearing element (28) is provided which extends along the second bore (18) through the wall (21), in that the rod-like arm (6) of the fastening element (5) can be led along the common insertion axis (22) through the bore (17) and through the second bore (18), and in that the rod-like arm (6), led through the bore (17) and the second bore (18), of the fastening element (5) is supported on the wall (21) of the main body (4) by way of the elastic bearing element (27) and by way of the second elastic bearing element (28).

6. Connecting element according to Claim 5, **characterized**
**in that** the fastening element (5) has a further rod-like arm (7), in that a third cutout (19), which is formed by a third bore (19), and a fourth cutout (20), which is formed by a fourth bore (20), are provided in the wall (21) of the main body (4), in that the third bore (19) and the fourth bore (20) extend from the outer side (26) of the wall (21) into the receiving chamber (15), in that the third bore (19) and the fourth bore (20) lie on a common further insertion axis (23) for the further rod-like arm (7) of the fastening element (5), in that a third sleeve-like, elastic bearing element (29) is provided which extends along the third bore (19) through the wall (21), and a fourth sleeve-like, elastic bearing element (30) is provided which extends along the fourth bore (20) through the wall (21), in that the further rod-like arm (7) of the fastening element (5) can be led along the further common insertion axis (23) through the third bore (19) and the fourth bore (20), and in that the fastening element (5) led through the third bore (19) and the fourth bore (20) is supported on the wall (21) of the main body (4) by way of the third elastic bearing element (29) and by way of the fourth elastic bearing element (30).

7. Connecting element according to Claim 6, **characterized**
**in that** the fastening element (5) is in the form of a U-shaped fastening element (5), and/or in that the insertion axis (22) and the further insertion axis (23) are oriented at least approximately parallel to one another, and/or in that the insertion axis (22) is oriented at least approximately perpendicular to an axis (9) of the receiving chamber (15), and/or in that the further insertion axis (23) is oriented at least approximately perpendicular to an axis (9) of the receiving chamber (15).

8. Connecting element according to Claim 6 or 7, **characterized**
**in that** the fastening element (5) is formed at least partially from a metallic material, wherein at least the rod-like arm (6) and the further rod-like arm (7) are formed from the metallic material.

9. Connecting element according to Claim 1, **characterized**
**in that** the elastic bearing element (27') is provided on an inner side (35) of the wall (21) of the main body (4).

10. Connecting element according to Claim 9, **characterized**
**in that** the main body (4) has an opening (16) by which the fuel connector (3) can be led into the receiving chamber (15), in that the wall (21) of the main body (4) has a ring-shaped face side (36) which surrounds the opening (16), and in that the elastic bearing element (27') extends from an outer side (26) of the wall (21) to the inner side (35) of the wall (21) over the face side (36) of the wall (21).

11. Connecting element according to Claim 9 or 10, **characterized**
**in that** the elastic bearing element (27') extends circumferentially over the inner side (35) of the wall (21).

12. Fuel injection system (1), in particular for mixture-compressing, applied-ignition internal combustion engines, having at least one fuel-conducting component, at least one fuel injection valve (3) and at least one connecting element (2) according to one of Claims 1 to 11, wherein the fuel connector (3) of the fuel injection valve is connected to the fuel-conducting component by way of the connecting element (2).

## Revendications

1. Élément de connexion (2) pour des installations d'injection de carburant (1) pour la connexion d'une soupape d'injection de carburant à un composant conduisant le carburant, un corps de base (4) étant pourvu d'un espace de réception (15) dans lequel une tubulure de carburant (3) de la soupape d'injection de carburant peut être introduite au moins en partie, au moins un évidement (17 - 20) étant réalisé dans une paroi (21) du corps de base (4) qui entoure l'espace de réception (15), et un élément de fixation (5) étant prévu, lequel peut être introduit au moins en partie à travers l'évidement (17 - 20) dans l'espace de réception (15) pour la fixation de la tubulure de carburant (3) au corps de base (4), **caractérisé en ce**
**qu'**au moins un élément de support élastique (27 - 30 ; 27') est prévu et en ce que l'élément de fixation (5) introduit au moins en partie à travers l'évidement (17 - 20) dans l'espace de réception (15) est supporté par le biais de l'élément de support élastique (27 - 30 ; 27') contre la paroi (21) du corps de base (4).

2. Élément de connexion selon la revendication 1, **caractérisé en ce que**
l'élément de support élastique (27 - 30) est disposé au niveau de l'évidement (17 - 20) qui est prévu dans la paroi (21) du corps de base (4).

3. Élément de connexion selon la revendication 2, **caractérisé en ce que**
l'évidement (17 - 20) qui est prévu dans la paroi (21) du corps de base (4) est formé par un alésage (17 - 20) qui s'étend depuis un côté extérieur (26) de la paroi (21) dans l'espace de réception (15), **en ce que** l'élément de support élastique (27 - 30) est réalisé sous forme d'élément de support élastique en forme de douille (27 - 30) et **en ce que** l'élément de support en forme de douille (27 - 30) s'étend au moins le long de l'alésage (17 - 20) à travers la paroi (21).

4. Élément de connexion selon la revendication 3, **caractérisé en ce que**
l'élément de support en forme de douille (27 - 30) s'étend au moins essentiellement seulement le long de l'alésage (17 - 20) à travers la paroi (21).

5. Élément de connexion selon la revendication 3 ou 4,
**caractérisé en ce que**
l'élément de fixation (5) présente au moins un bras en forme de barre (6), **en ce qu'**un deuxième évidement (18) est prévu dans la paroi (21) du corps de base (4), lequel est formé par un deuxième alésage (18), **en ce que** le deuxième alésage (18) s'étend depuis le côté extérieur (26) de la paroi (21) dans l'espace de réception (15), **en ce que** l'alésage (17) et le deuxième alésage (18) sont situés sur un axe d'enfoncement commun (22) pour le bras en forme de barre (6) de l'élément de fixation (5), **en ce qu'**un deuxième élément de support élastique en forme de douille (28) est prévu, lequel s'étend le long du deuxième alésage (18) à travers la paroi (21), **en ce que** le bras en forme de barre (6) de l'élément de fixation (5) peut être guidé le long de l'axe d'enfoncement commun (22) à travers l'alésage (17) et le deuxième alésage (18) et **en ce que** le bras en forme de barre (6) de l'élément de fixation (5) guidé à travers l'alésage (17) et le deuxième alésage (18) est supporté par le biais de l'élément de support élastique (27) et du deuxième élément de support élastique (28) contre la paroi (21) du corps de base (4).

6. Élément de connexion selon la revendication 5, **caractérisé en ce que**
l'élément de fixation (5) présente un bras supplémentaire en forme de barre (7), **en ce que** dans la paroi (21) du corps de base (4) sont prévus un troisième évidement (19) qui est formé par un troisième alésage (19), et un quatrième évidement (20) qui est formé par un quatrième alésage (20), **en ce que** le troisième alésage (19) et le quatrième alésage (20) s'étendent depuis le côté extérieur (26) de la paroi (21) dans l'espace de réception (15), **en ce que** le troisième alésage (19) et le quatrième alésage (20) sont situés sur un axe d'enfoncement supplémentaire commun (23) pour le bras supplémentaire en forme de barre (7) de l'élément de fixation (5), **en ce que** le troisième élément de support élastique en forme de douille (29) qui s'étend le long du troisième alésage (19) à travers la paroi (21) et un quatrième élément de support élastique en forme de douille (30) qui s'étend le long du quatrième alésage (20) à travers la paroi (21), sont prévus, **en ce que** le bras supplémentaire en forme de barre (7) de l'élément de fixation (5) peut être guidé le long de l'axe d'enfoncement supplémentaire commun (23) à travers le troisième alésage (19) et le quatrième alésage (20) et **en ce que** l'élément de fixation (5) guidé à travers le troisième alésage (19) et le quatrième alésage (20) est supporté par le biais du troisième élément de support élastique (29) et du quatrième élément de support élastique (30) contre la paroi (21) du corps de base (4).

7. Élément de connexion selon la revendication 6, **caractérisé en ce que**
l'élément de fixation (5) est réalisé sous forme d'élément de fixation en forme de U (5) et/ou **en ce que** l'axe d'enfoncement (22) et l'axe d'enfoncement supplémentaire (23) sont orientés au moins approximativement parallèlement l'un à l'autre et/ou **en ce que** l'axe d'enfoncement (22) est orienté au moins approximativement perpendiculairement à un axe (9) de l'espace de réception (15) et/ou **en ce que** l'axe d'enfoncement supplémentaire (23) est orienté au moins approximativement perpendiculairement à un axe (9) de l'espace de réception (15).

8. Élément de connexion selon la revendication 6 ou 7,
**caractérisé en ce que**
l'élément de fixation (5) est formé au moins en partie d'un matériau métallique, au moins le bras en forme de barre (6) et le bras supplémentaire en forme de barre (7) étant formés du matériau métallique.

9. Élément de connexion selon la revendication 1, **caractérisé en ce que**
l'élément de support élastique (27') est prévu au niveau d'un côté intérieur (35) de la paroi (21) du corps de base (4).

10. Élément de connexion selon la revendication 9, **caractérisé en ce que**
le corps de base (4) présente une ouverture (16) par le biais de laquelle la tubulure de raccordement (3) peut être guidée dans l'espace de réception (15), **en ce que** la paroi (21) du corps de base (4) présente un côté frontal de forme annulaire (36) qui entoure l'ouverture (16) et **en ce que** l'élément de support élastique (27') s'étend depuis un côté extérieur (26) de la paroi (21) sur le côté frontal (36) de la paroi (21) jusqu'au côté intérieur (35) de la paroi (21).

11. Élément de connexion selon la revendication 9 ou 10,
**caractérisé en ce que**
l'élément de support élastique (27') s'étend sur la périphérie sur le côté intérieur (35) de la paroi (21).

12. Installation d'injection de carburant (1), en particulier pour moteurs à combustion interne à allumage par étincelle et à compression de mélange, comprenant au moins un composant conduisant du carburant, au moins une soupape d'injection de carburant (3) et au moins un élément de connexion (2) selon l'une quelconque des revendications 1 à 11, la tubulure de combustible (3) de la soupape d'injection de carburant étant connectée par le biais de l'élément de connexion (2) au composant conduisant le carburant.
